# EUROPÄISCHE PATENTSCHRIFT

(11) **EP 1 370 449 B1**
(45) Veröffentlichungstag und Bekanntmachung des Hinweises auf die Patenterteilung: **08.09.2004**
(21) Anmeldenummer: 02722142.3
(22) Anmeldetag: 27.02.2002
(51) Int. Cl.: B60T 8/32, B60T 8/58, B60T 8/00

(54) **VERFAHREN ZUR STEUERUNG UND/ODER REGELUNG DES BREMSDRUCKAUFBAUS BEI VOLLBREMSUNG AUF HOCHREIBWERT**
METHOD FOR CONTROLLING AND/OR REGULATING THE BUILD-UP OF BRAKE PRESSURE WHEN FULL BRAKING AT A HIGH FRICTION COEFFICIENT
PROCEDE DE COMMANDE ET/OU DE REGULATION DE L'ETABLISSEMENT DE LA PUISSANCE DE FREINAGE LORS D'UN FREINAGE TOTAL A UN COEFFICIENT DE FROTTEMENT ELEVE

(30) Priorität: 15.03.2001 DE 10112897; 04.04.2001 DE 10116755
(43) Veröffentlichungstag der Anmeldung: 17.12.2003
(73) Patentinhaber: Continental Teves AG & Co. OHG, 60488 Frankfurt am Main (DE)
(72) Erfinder: LUH, Steffen, 65589 Hadamar (DE); DOLLET, Anthony, 64331 Weiterstadt-Braunshard (DE)
(86) Internationale Anmeldenummer: PCT/EP2002/002058
(87) Internationale Veröffentlichungsnummer: WO 2002/074595

(56) Entgegenhaltungen:
- EP-A- 0 918 004
- DE-A- 3 521 960
- DIPL. ING. HORST BAUER: "KRAFTFAHRTECHNISCHES TASCHENBUCH" 1999 , ROBERT BOSCH GMBH , GERMANY XP002207332 23 Seite 659-672

## Beschreibung

Die Erfindung bezieht sich auf ein Verfahren zur Steuerung und/oder Regelung des Bremsdruckaufbaus bei Vollbremsung auf Hochreibwert, für eine fremdbremsfähige Bremsanlage mit Blokkierschutzregelung, wobei das Drehverhalten der einzelnen Fahrzeugräder und der momentane Reibwert und/oder die Fahrbahnsituation ermittelt oder abgeschätzt und zur Steuerung und/oder Regelung des Bremsdruckes ausgewertet werden. Ein derartiges Verfahren ist aus dem Dokument EP-A-0 918 004 bekannt.

Zukünftige "X-By-Wire"-Systeme (Brake-By-Wire-Bremssysteme), wie elektrohydraulische (EHB) oder elektromechanische Bremssysteme (EMB) etc., verfügen systembedingt über Druck- und/oder Kraftsensoren an den Radbremskreisen. Mit Hilfe der durch solche Sensoren gewonnen Informationen lassen sich im Vergleich zu den bei herkömmlichen Systemen zur Verfügung stehenden Messgrößen und Informationen besser angepasste Druckaufbauprofile erzielen.

Gerade der erstmalige Druckaufbau, der Einstieg in eine ABS-Regelung und die Ausregelung der ersten Radblockierneigung verdienen besondere Beachtung. Mit heutigen ABS-Reglern sind beim ersten Bremsantritt oft ein zu tiefer Schlupfeinlauf der einzelnen Räder und außerdem aufgrund eines verzögerten Druckabbaus eine zu lange andauernde Phase im instabilen Bereich zu beobachten. Die Folge ist, dass das Radaufstandskraftmaximum nicht immer zum Erzielen einer erhöhten Bremskraftwirkung genutzt werden kann, wodurch letztendlich wertvoller Bremsweg verschenkt wird.

Der vorliegenden Erfindung liegt daher die Aufgabe zugrunde, die Druckaufbaustrategie in solchen Systemen zu verbessern.

Es hat sich herausgestellt, dass diese Aufgabe durch das im beigefügten Anspruch 1 beschriebene Verfahren gelöst werden kann, dessen Besonderheit in der Abfolge der folgenden Schritte besteht:
- Erkennen einer Vollbrems- oder Notbremssituation,
- schneller Bremsdruckaufbau zu Beginn des Bremsvorgangs,
- Vergleichen des Radschlupfes und der Radverzögerung oder der gefilterten Radverzögerung mit vorgegebenen Grenzwerten und
- Verringerung des Bremsdruckaufbaugradienten bzw. Übergang zu einem verminderten Bremsdruckaufbaugradienten unmittelbar vor dem Erreichen des Blockierdruckniveaus, d.h. beim Überschreiten der für den Radschlupf und für die Radverzögerung vorgegebenen Grenzwerte.

Die Unteransprüche haben besonders vorteilhafte Ausführungsbeispiele des erfindungsgemäßen Verfahrens zum Gegenstand.

Die beigefügten Abbildungen dienen zur Veranschaulichung und näheren Erläuterung der Erfindung. Es zeigen in Form von Diagrammen
- Bild 1: den Verlauf der Radaufstandskräfte,
- Bild 2: den Verlauf der Radgeschwindigkeiten und der Fahrzeug-Referenzgeschwindigkeit ,
- Bild 3: die Druckaufbaustrategie und
- Bild 4: die Bremskraft über dem Radschlupf mit der Radaufstandskraft als Parameter.

Der Erfindung liegen folgende Erkenntnisse und Überlegungen zugrunde:

Als Folge der hohen Fahrzeugverzögerung im Fall einer Notbremsung ergibt sich eine erhebliche dynamische Achslastverlagerung von der Hinterachse auf die Vorderachse. Da dieser Vorgang mit einem recht ausgeprägten und reproduzierbaren Einschwingverhalten abläuft, kann dadurch mit einer optimierten Drucksteuerung bzw. Druckregelung ein deutlicher Gewinn an Bremsleistung erzielt werden.

Durch die "X-By-Wire"-Systeme (Brake-By-Wire) oder auch andere fremdbremsfähige Anlagen wird nun die Möglichkeit eröffnet, weitgehend unabhängig von der direkten Bremsanforderung durch den Fahrer den ersten Druckaufbau zu gestalten.

Dieser Druckaufbau kann mit der nachfolgend beschriebenen Kontur derart geschickt gewählt werden, dass der oben genannten dynamischen Achslastverlagerung des Fahrzeugs optimal Rechnung getragen wird.

Aus Simulationen und Versuchsreihen wurde herausgefunden, dass ein schneller Druckaufbau bis zum Erreichen des Blockierdruckes (bspw. innerhalb von nur 100 ms) nicht zu optimalen Bremsergebnissen führt, da das Fahrzeug den Einfederungsvorgang noch nicht abgeschlossen hat. In der Regel benötigen Fahrzeuge ca. 300 ms bis zum Erreichen der maximalen Radaufstandskraft an den Vorderrädern.

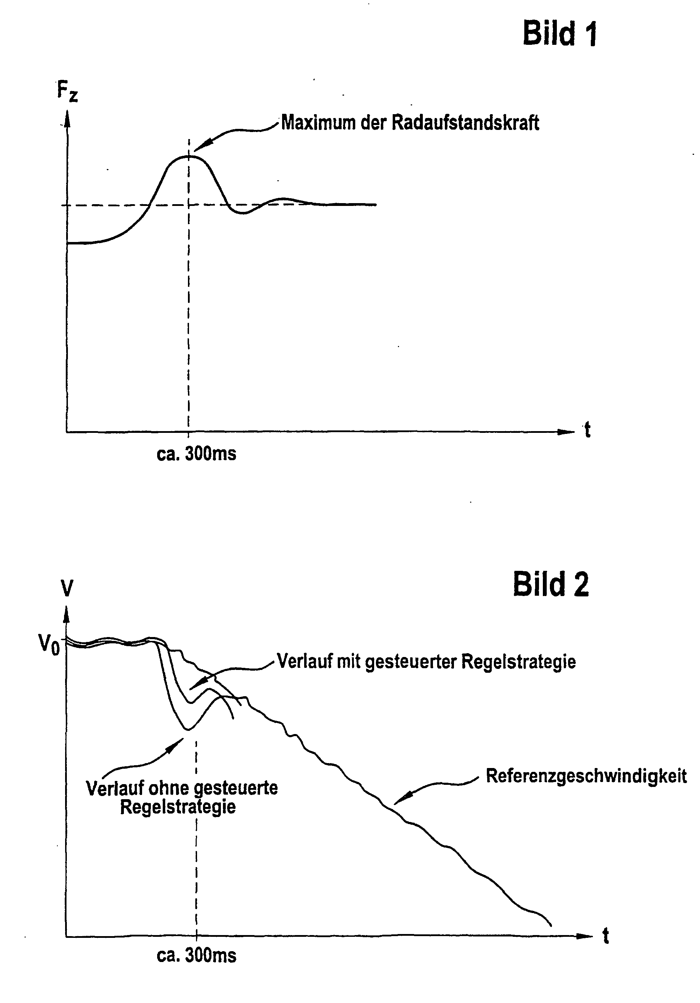

In Bild 1 ist der Verlauf Radaufstandskräfte in einer beispielhaften Situation dargestellt.

Ein zu steiler Druckaufbau bewirkt, dass die Vorderräder deutlich vor dem Erreichen des Radaufstandskraftmaximums an die Blockiergrenze gebracht werden. Somit erfolgt ein Druckabbau bereits auf sehr niedrigem Druckniveau, da sich der Blockierdruck nahezu linear mit der Radaufstandskraft erhöht. Die Folge ist, dass sich das Rad in einem Arbeitspunkt befindet, der ge ist, dass sich das Rad in einem Arbeitspunkt befindet, der durch niedrige Radaufstandskräfte und große Schlupfwerte charakterisiert ist. In Bild 2 ist der Verlauf Radgeschwindigkeiten in der herkömmlichen Weise und bei Anwendung des erfindungsgemäßen Verfahrens (d.h. mit und ohne gesteuerter Regelstrategie) wiedergegeben.

Daraus folgt die Erkenntnis, dass ein möglichst schneller Druckaufbau (sogenannte BA- bzw. Bremsassistenz-Funktion) zu Beginn der Bremsung erfolgen muss, ohne dass die Vorderräder bereits mit dem vollen Druckaufbaugradienten zum Blockieren gebracht werden, d.h. unmittelbar vor dem Erreichen des Blokkierdruckniveaus sollte ein Druckanstieg mit einem vermindertem Gradienten erfolgen. Die Berechnung dieses Gradienten ist abhängig von dem Raddrehverhalten, dessen Bewertung mit Hilfe des Schlupfes und der gefilterten Radverzögerung erfolgt.

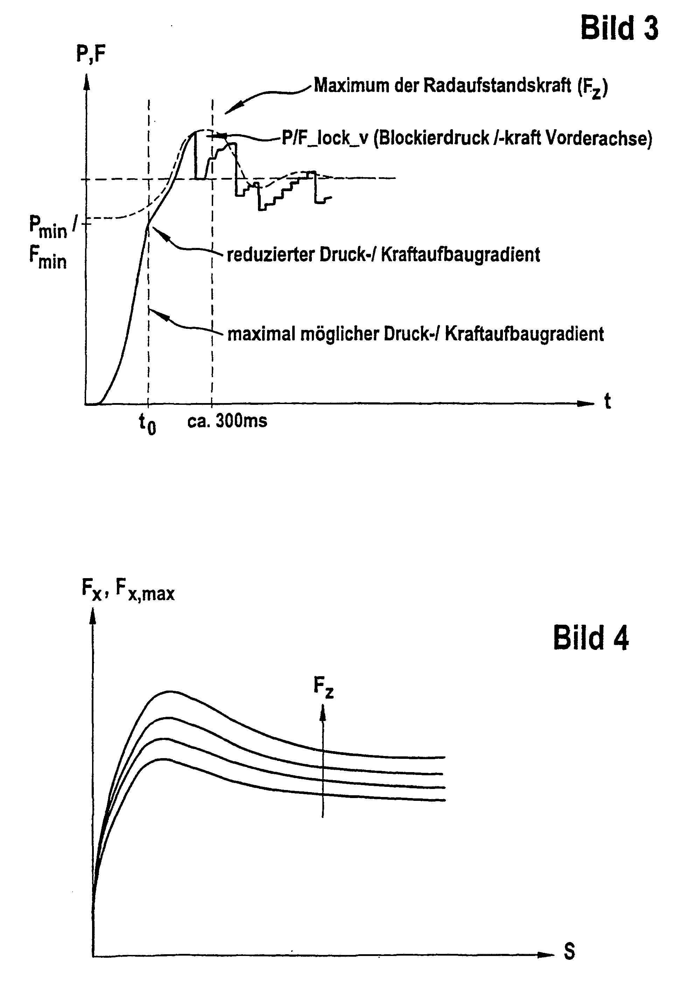

Das Erreichen des Blockierdruckniveaus wird über die Auswertung der gemittelten Drücke an der Vorderachse, der Schlupfbewertung (bspw. > 5 % Schlupf und eine Schlupfintegral-Betrachtung) und der gefilterten Radverzögerungen (bspw. <-1,6 g) detektiert. Die erfindungsgemäße Strategie des Druck-/- Kraftaufbaus veranschaulicht Bild 3.

Es wird erreicht, dass sich das Fahrzeuggewicht schon weitgehend auf die Vorderachse verlagert hat, so dass dementsprechend das Rad in einem Arbeitspunkt betrieben wird, der sich durch einen stabilen Schlupfbereich bei hohen Radaufstandkräften auszeichnet. Bei optimalem Timing werden die Vorderräder zum Blockieren gebracht, bevor die Radaufstandskraft ihr Maximum erreicht. Dieser Zustand ist anzustreben, da sich ansonsten bei einer späteren Blockade der Vorderräder am Punkt der maximalen Radaufstandskraft ein starker Mitkopplungseffekt einstellt, der sich dadurch äußert, dass die µ-Schlupf-Kuppe des Reifens genau in diesem Punkt überschritten wird, wenn das des Reifens genau in diesem Punkt überschritten wird, wenn das maximale Gewicht auf dem Reifen lastet. Somit wird bei einer jetzt anstehenden Radblockade nicht nur die Kuppe überschritten, sondern auch der Reifen in einem Arbeitsbereich mit deutlich weniger zu übertragender Radaufstandkraft überführt (vgl. Bild 4). Die sich ergebende starke Blockierneigung des Reifens verlangt eine extreme Druckentlastung und eine sich damit ergebende Längsverzögerungsschwankung. Die Regelstrategie verlangt daher einen Kompromiss, der sich zwischen den beschriebenen Extremfällen befindet.

Durch das erfindungsgemäße Verfahren wird also, wie Bild 3 zu entnehmen ist, als Folge der Verringerung des Bremsdruckaufbaugradienten zum Zeitpunkt t₀ (t₀ bezeichnet den Übergang zu dem verminderten Bremsdruckaufbaugradienten) und des weiteren Verlaufs des Bremsdruckgradienten in Abhängigkeit vom dem Raddrehverhalten bis zum Erreichen des Blockierdruckniveaus - im Vergleich zu einer herkömmlichen Blockierschutzregelung - eine Verzögerung des Bremsdruckaufbaus erreicht. Die Erhöhung der Radaufstandskraft durch die dynamische Achslastverlagerung wirkt sich zum Einsatzzeitpunkt der Blockierschutzregelung aus. Der regelungsbedingte Bremsdruckabbau setzt später ein, das Blockierdruckniveau liegt höher, der Bremsweg wird dadurch kürzer.

Zur Schätzung der dynamischen Achslastschwankung während des ersten Einnickens des Fahrzeugs dank der neuen X-By-Wire Druck-/ Kraftsensorik ist folgendes zu beachten:

Die zuvor beschriebenen Druckmodulationsmechanismen erfordern Kenntnisse über die einzelnen dynamischen Radaufstandskräfte während des ersten Fahrzeugeinnickens. Bei handelsüblichen Fahrwerken geht man von weitgehend konstanten Radaufstandskraft-Verläufen aus, wenn das Fahrzeug auf Hochreibwert hart angebremst wird (hard brake apply). kraft-Verläufen aus, wenn das Fahrzeug auf Hochreibwert hart angebremst wird (hard brake apply).

Den Fahrbahnreibwert erkennt man an dem ohne Blockierneigung erreichten Druckwert.
Das harte Antreten erkennt man am Gradienten des vom Fahrer betätigten Bremspedals mit Hilfe der Bremspedalsensorik (bspw. Pedalweg, Pedaldruck) .

### Zusammenfassend ist festzuhalten:

Das Besondere des erfindungsgemäßen Verfahrens ist die Ausnutzung der Raddruck- / kraftinformation in Kombination mit einer fremdbremsfähigen Betriebsbremsanlage (X-by-Wire) in dem Zusammenhang mit der Druck- / Kraftaufbaustrategie.

Ausgenutzt wird die Dynamik der vorhandenen, fremdbremsfähigen Betriebsbremsanlage beim Betätigen des Bremspedals bzw. Erkennen einer Notsituation (Bremsassistenten-Eingriff → Vollbremsung) auf Hochreibwert, d.h. maximaler Solldruck- bzw.-kraftaufbau zu Beginn der Bremsung, dann ein dem Fahrzeug angepasster abgeschwächter definierter geregelter (oder gesteuerter) Solldruck- bzw. Sollkraftverlauf, um die sich bis zum Maximum steigernde Radaufstandskraft (siehe Bild 1) optimal zu nutzen, ohne das Rad in zu großen Schlupf zu bringen und letztendlich damit Bremsweg zu verschenken. Die Radaufstandskraft ist als ein Maß für die an dem Fahrzeug übertragbare Bremskraft anzusehen.

Der angepasste geregelte / gesteuerte Verlauf der Bremskraft-/ Bremsdruckvorgabe ist abhängig von:
a) dem Radverhalten (Schlupf -3 optimales Schlupfband, der Radverzögerung),
b) der Reibwertschätzung der Fahrbahn (Einbindung der Raddruckinformation),
c) einem evtl. mitlaufenden Fahrzeugmodell (gespeist durch Fahrwerksmesssignale).

## Patentansprüche

1. Verfahren zur Steuerung und/oder Regelung des Bremsdruckaufbaus bei Vollbremsung auf Hochreibwert, für eine fremdbremsfähige Bremsanlage mit Blockierschutzregelung, wobei das Drehverhalten der einzelnen Fahrzeugräder und der momentane Reibwert und/oder die Fahrbahnsituation ermittelt oder abgeschätzt und zur Steuerung und/oder Regelung des Bremsdruckes ausgewertet werden, mit den Schritten :
- Erkennen einer Vollbrems- oder Notbremssituation,
- schneller Bremsdruckaufbau zu Beginn des Bremsvorgangs,
**gekennzeichnet durch** die Schritte:
- Vergleichen des Radschlupfes und der Radverzögerung oder der gefilterten Radverzögerung mit vorgegebenen Grenzwerten und
- Verringerung des Bremsdruckaufbaugradienten bzw. Übergang zu einem verminderten Bremsdruckaufbaugradienten unmittelbar vor dem Erreichen des Blockierdruckniveaus, d.h. beim Überschreiten der für den Radschlupf und für die Radverzögerung vorgegebenen Grenzwerte.

2. Verfahren nach Anspruch 1, **dadurch gekennzeichnet, dass** zum Erkennen der Vollbrems- oder Notbremssituation die Bremspedalbetätigungsgeschwindigkeit und/oder-geschwindigkeitsänderung ausgewertet werden.

3. Verfahren nach Anspruch 1 oder 2, **dadurch gekennzeichnet, dass** als Grenzwert für den Radschlupf ein Schlupf in der Größenordnung von > 3% bis > 7%, insbesondere > 5%, vorgegeben wird.

4. Verfahren nach einem oder mehreren der Ansprüche 1 bis 3, **dadurch gekennzeichnet, dass** als Grenzwert für die gefilterte Radverzögerung ein Wert in der Größenordnung von terte Radverzögerung ein Wert in der Größenordnung von "< -1,2g" bis "< -2,5g", insbesondere "< -1,6g", vorgegeben wird.

5. Verfahren nach einem oder mehreren der Ansprüche 1 bis 4, **dadurch gekennzeichnet, dass** der verminderte Bremsdruckaufbaugradient bis zum Einsetzen der Blockierschutzregelung in Abhängigkeit von dem Radverhalten, insbesondere von dem Radschlupf und von der gefilterten Radverzögerung, derart bemessen wird, dass die vorgegebenen Grenzwerte des Radschlupfes und der gefilterten Beschleunigung annähernd erhalten bleiben, d.h. innerhalb eines vorgegebenen Toleranzbereiches liegen.

## Claims

1. Method for controlling and/or regulating the build-up of brake pressure when full braking at a high friction coefficient, intended for an independent brake system with anti-lock control, wherein the rotational behavior of the individual vehicle wheels and the instantaneous friction coefficient and/or the roadway situation are determined or estimated and evaluated for the control and/or regulation of the brake pressure, comprising the steps of
- detecting a full braking or panic stop situation,
- quick brake pressure build-up at the beginning of the braking operation,
**characterized by** the steps of
- comparing the wheel slip and the wheel deceleration or the filtered wheel deceleration with predetermined limit values, and
- reduction of the brake pressure build-up gradient or transition to a reduced brake pressure build-up gradient directly before reaching the locking pressure level, that means, when the limit values predefined for the wheel slip and the wheel deceleration are exceeded.

2. Method as claimed in claim 1,
**characterized in that** the brake pedal application speed and/or speed variation is evaluated for detecting the full braking or panic stop situation.

3. Method as claimed in claim 1 or 2,
**characterized in that** a slip in the order of > 3% up to > 7%, in particular > 5%, is predetermined as a limit value for the wheel slip.

4. Method as claimed in any one or more of claims 1 to 3,
**characterized in that** a value in the order of '< 1.2 g' up to '< - 2.5 g', in particular '< - 1.6 g', is predetermined as a limit value for the filtered wheel deceleration.

5. Method as claimed in any one or more of claims 1 to 4,
**characterized in that** the reduced brake pressure build-up gradient until the commencement of the anti-lock control, in dependence on the wheel behavior, in particular on the wheel slip and the filtered wheel deceleration, is proportioned such that the predetermined limit values of the wheel slip and the filtered acceleration are approximately preserved, i.e., lie within a predetermined tolerance range.

## Revendications

1. Procédé de commande et/ou de régulation de la montée en pression de freinage en cas de freinage complet au coefficient d'adhérence haut, pour un système de freinage susceptible d'être assisté, avec régulation de protection contre le blocage, selon lequel le comportement en rotation des différentes roues du véhicule et le coefficient d'adhérence momentané et/ou la situation de la chaussée sont déterminés ou estimés et exploités pour commander et/ou réguler la pression de freinage, au cours des étapes suivantes :
- détection d'une situation de freinage complet ou de freinage d'urgence,
- montée rapide en pression de freinage au début du processus de freinage,
**caractérisé par** les étapes suivantes :
- comparaison du glissement des roues et du ralentissement des roues ou du ralentissement filtré des roues avec des valeurs limites prédéfinies et
- réduction du gradient de la montée en pression de freinage ou transition vers un gradient réduit de la montée en pression de freinage immédiatement avant que soit atteint le niveau de la pression de blocage, c'est-à-dire le dépassement des valeurs limites prédéfinies pour le glissement des roues pour leur ralentissement.

2. Procédé selon la revendication 1, **caractérisé en ce que** pour reconnaître la situation de freinage complet ou de freinage d'urgence, on exploite la vitesse d'actionnement de la pédale de frein et/ou la variation de la vitesse d'actionnement de la pédale de frein.

3. Procédé selon la revendication 1 ou 2, **caractérisé en ce qu'**il est prédéfini comme valeur limite pour le glissement des roues, un glissement d'un ordre de grandeur de > 3% à > 7%, en particulier > 5%.

4. Procédé selon l'une ou plusieurs des revendications 1 à 3, **caractérisé en ce qu'**il est prédéfini comme valeur limite pour le ralentissement filtré des roues, une valeur d'un ordre de grandeur de « < -1,2 g » à « < -2,5 g » notamment de « < -1,6 g ».

5. Procédé selon l'une ou plusieurs des revendications 1 à 4, **caractérisé en ce que** le gradient réduit de la montée en pression de freinage jusqu'à l'instauration de la régulation de protection contre le blocage en fonction du comportement des roues, en particulier du glissement des roues et du ralentissement filtré des roues, est dimensionné de manière que les valeurs limites prédéfinies du glissement des roues et de l'accélération filtrée soient approximativement maintenues, c'est-à-dire qu'elles se situent à l'intérieur d'une plage de tolérance prédéfinie.
